# EUROPEAN PATENT APPLICATION

(11) **EP 3 502 868 A1**
(43) Date of publication of application: **26.06.2019**
(21) Application number: 18214870.0
(22) Date of filing: 20.12.2018
(51) Int. Cl.: G06F 3/16

(54) **INTELLIGENT PERSONAL ASSISTANT INTERFACE SYSTEM**

(30) Priority: 21.12.2017 IN 201741046031; 08.05.2018 US 201815974626
(71) Applicant: Harman International Industries, Incorporated, Stamford, CT 06901 (US)
(72) Inventor: Declerck, Daniel J., Stamford, CT Connecticut 06901 (US); VanGoethem, Timothy Raymond, Stamford, CT Connecticut 06901 (US); Biswal, Rajesh, Stamford, CT Connecticut 06901 (US)
(74) Representative: Rummler, Felix

(57) **Abstract**

An embodiment sets forth a technique for interfacing with multiple intelligent personal assistants. The technique includes receiving user input comprising a trigger phrase and a command. The technique also includes identifying, via a processor and from a plurality of personal assistant services, a personal assistant service that corresponds to the trigger phrase. The processor is configured to communicate with each personal assistant service included in the plurality of personal assistant services. The technique further includes transmitting a request associated with the command to the personal assistant service, receiving a response to the request from the personal assistant service, and performing one or more operations based on the response.

## Description

### CROSS-REFERENCE TO RELATED APPLICATIONS

This application claims priority benefit of the Indian Provisional Patent Application titled, "Personal Assistant Management System," filed on December 21, 2017, and having Application No. 201741046031. The subject matter of this related application is hereby incorporated herein by reference.

### BACKGROUND

### Field of the Various Embodiments

The various embodiments relate generally to computing devices and, more specifically, to an intelligent personal assistant interface system.

### Description of the Related Art

Virtual assistant technology, which is also commonly referred to as personal assistant technology or intelligent personal assistant technology, is a growing technology area. A personal assistant agent interfaces with a corresponding personal assistant service to perform various tasks or services for a user. A user may interact with a personal assistant agent via a device, such as a smartphone, smart speaker, or in-vehicle infotainment system. The personal assistant agent may connect to other devices and/or to various online resources (e.g., search engines, databases, e-commerce sites, a personal calendar, etc.) via a corresponding personal assistant service to perform various tasks and services. Examples of the tasks that may be performed may include operating a device, performing a search, making purchases, providing recommendations, and setting calendar appointments. Examples of personal assistant technology include ALEXA® by Amazon.com, Inc., GOOGLE® ASSISTANT by Google LLC, SIRI® by Apple Inc., and CORTANA® by Microsoft Corporation.

A hardware device that implements personal assistant technology is typically associated with a single personal assistant service. For example, a device may implement a particular personal assistant agent that is configured to interface with only one personal assistant service. One drawback of this approach is that the user is limited in his or her choice of devices and/or personal assistant services. For example, a user may not be able to use a certain device if the personal assistant agent for his preferred personal assistant service is not implemented at that device. Further, implementing multiple hardware devices, each of which includes a different personal assistant agent, is impractical and/or cost prohibitive in many contexts, such as inside a vehicle cabin.

A conventional approach to resolving the above drawbacks is to use a personal assistant service as an intermediary to interact with other personal assistant services. For example, a user may issue a request to direct a first personal assistant service to perform a task via a second personal assistant service. However, a drawback of this approach is that this approach is cumbersome and unintuitive. Users are not naturally inclined to instruct one personal assistant service to interact with another personal assistant service. Consequently, such requests may be awkward and inefficient for users.

As the foregoing illustrates, what is needed are more effective techniques for interfacing with multiple personal assistant services.

### SUMMARY

One embodiment sets forth a method for interfacing with a plurality of intelligent personal assistants. The method includes receiving first user input comprising a first trigger phrase and a first command. The method also includes identifying, via a processor and from a plurality of personal assistant services, a first personal assistant service that corresponds to the first trigger phrase, where the processor is configured to communicate with each personal assistant service included in the plurality of personal assistant services. The method further includes transmitting a first request associated with the first command to the first personal assistant service, receiving a response to the first request from the first personal assistant service; and performing one or more operations based on the response.

Further embodiments provide, among other things, a system and a non-transitory computer-readable medium configured to implement the method set forth above.

At least one advantage and technological improvement of the disclosed techniques is that a user is able to interact with any of multiple personal assistants via a single device without having to use one personal assistant as an intermediary to the other personal assistants. Additionally, a user is able to interact with any of multiple personal assistants without having to use multiple physical devices, where each of the multiple devices is associated with a different personal assistant. Accordingly, interactions between the user and the personal assistant are more intuitive and conversational, resulting in a smoother and more efficient experience for the user.

### BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
Figure 1 illustrates a computing device configured to implement one or more aspects of the various embodiments;
Figure 2 is a block diagram of a personal assistant coordinator application for interfacing with multiple personal assistant services, according to one or more aspects of the various embodiments;
Figures 3A-3B illustrate a flow diagram of an exemplary process for audio-based communications between a personal assistant coordinator application and a personal assistant service, according to one or more aspects of the various embodiments;
Figures 4A-4B illustrate a flow diagram of an exemplary process for text-based communications between a personal assistant coordinator application and a personal assistant service, according to one or more aspects of the various embodiments; and
Figure 5 sets forth a flowchart of method steps for interfacing with a particular personal assistant service included in a plurality of different personal assistant services, according to one or more aspects of the various embodiments.

### DETAILED DESCRIPTION

In the following description, numerous specific details are set forth to provide a more thorough understanding of the various embodiments. However, it will be apparent to one of skilled in the art that the inventive concepts may be practiced without one or more of these specific details.

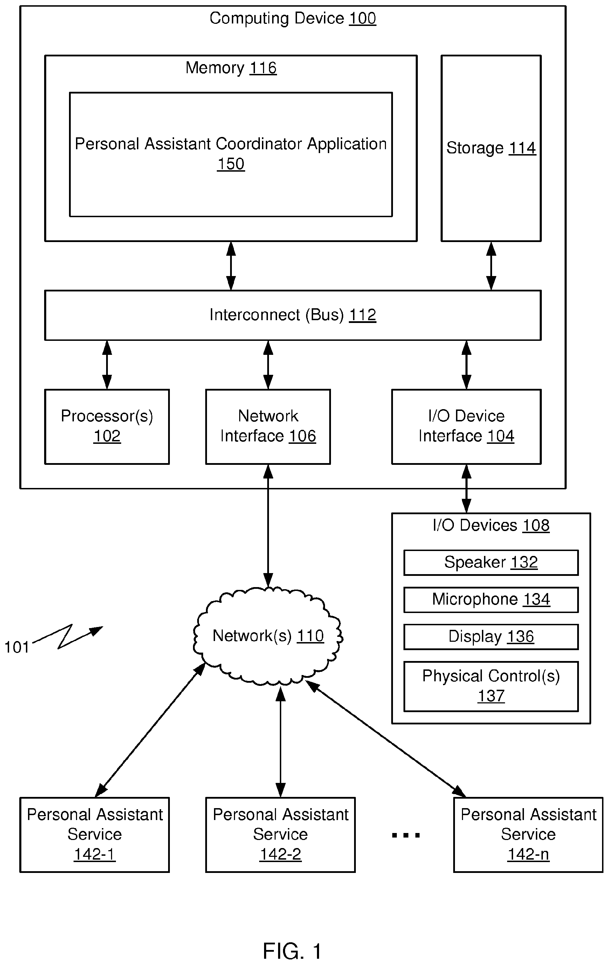

Figure 1 illustrates a computing device 100 configured to implement one or more aspects of the various embodiments. Computing device 100 may be a desktop computer, a laptop computer, a smartphone, a personal digital assistant (PDA), a tablet computer, a smart speaker, or any other type of computing device suitable for practicing one or more aspects of the various embodiments. In some embodiments, computing device 100 is integrated with a head unit of a vehicle. For example, the computing device 100 could be a computing device that implements an infotainment system within the vehicle. Computing device 100 is configured to run personal assistant coordinator application 150 that resides in a memory 116. It is noted that the computing device described herein is illustrative and that any other technically feasible configurations fall within the scope of the various embodiments.

As shown, computing device 100 includes, without limitation, an interconnect (bus) 112 that connects one or more processor(s) 102, an input/output (I/O) device interface 104 coupled to one or more input/output (I/O) devices 108, memory 116, a storage 114, and a network interface 106. Processors(s) 102 may be any suitable processor, such as a central processing unit (CPU), a graphics processing unit (GPU), an application-specific integrated circuit (ASIC), a field programmable gate array (FPGA), any other type of processing unit, or a combination of different processing units, such as a CPU configured to operate in conjunction with a GPU. In general, processor(s) 102 may be any technically feasible hardware unit capable of processing data and/or executing software applications, including personal assistant coordinator application 150.

I/O devices 108 may include devices capable of providing input, such as a keyboard, a mouse, a touch-sensitive screen, and so forth, as well as devices capable of providing output, such as a display device. In some embodiments, I/O devices 108 include an audio speaker 132 (and/or a similar audio output device, such as headphones), a microphone 134, a display device 136, and one or more physical controls 137 (e.g., one or more physical buttons, one or more touchscreen buttons, one or more physical rotary knobs, etc.). Additionally, I/O devices 108 may include devices capable of both receiving input and providing output, such as a touchscreen, a universal serial bus (USB) port, and so forth. I/O devices 108 may be configured to receive various types of input from a user of computing device 100 (e.g., receiving audio input, such as voice input, via microphone 134). I/O devices 108 may also provide various types of output to the end-user of computing device 100, such as displayed digital images or digital videos or text on display 136 and/or outputting audio via speaker 132. In some embodiments, one or more of I/O devices 108 are configured to couple computing device 100 to another device (not shown). For example, I/O devices 108 may include a wireless and/or wired interface (e.g., a Bluetooth interface, a Universal Serial Bus interface) to/from another device (e.g., a smartphone).

Storage 114 may include non-volatile storage for applications and data and may include fixed or removable disk drives, flash memory devices, and CD-ROM, DVD-ROM, Blu-Ray, HD-DVD, or other magnetic, optical, or solid state storage devices. Personal assistant coordinator application 150 may reside in storage 114 and may be loaded into memory 116 when executed. Additionally, in some embodiments, one or more data stores, such as databases of trigger words and phrases, databases of phonemes for text-to-speech conversion, and training data for voice recognition and/or speech-to-text conversion, may be stored in storage 114.

Memory 116 may include a random access memory (RAM) module, a flash memory unit, or any other type of memory unit or combination thereof. Processing unit(s) 102, I/O device interface 104, and network interface 106 are configured to read data from and write data to memory 116. Memory 116 includes various software programs (e.g., an operating system, one or more applications) that can be executed by processor(s) 102 and application data associated with said software programs, including personal assistant coordinator application 150.

In some embodiments, computing device 100 is included in a computing network environment 101 that also includes network(s) 110 and multiple personal assistant services 142. Network 110 may be any technically feasible type of communications network that allows data to be exchanged between computing device 100 and external entities or devices, such as a web server, or another networked computing device or system. For example, network 110 may include a wide area network (WAN), a local area network (LAN), a wireless network (e.g., a WiFi network), and/or the Internet, among others. Computing device 100 may connect with network(s) 110 via network interface 106. In some embodiments, network interface 106 is hardware, software, or a combination of hardware and software, that is configured to connect to and interface with network(s) 110.

Computing device 100 may interface with multiple personal assistant services 142 (e.g., personal assistant services 142-1 thru 142-n) via network(s) 110. In some embodiments, a personal assistant service 142 is implemented in one or more cloud computing systems (e.g., server systems) remote from computing device 100. A personal assistant service 142 may receive requests from users and perform one more tasks in response to the requests. Examples of tasks that may be performed by a personal assistant service 142 include, without limitation, obtaining search results or answers (e.g., via a search engine or a database) in response to user queries, accessing one or more resources (not shown) to obtain data (e.g., obtaining an email message, obtaining a calendar event, obtaining a to-do list item), creating or modifying data at one or more resources (e.g., composing an email message, modifying a calendar event, removing a to-do list item), and issuing instructions to devices to perform certain operations or execute certain functions (e.g., instructing a smart thermostat to adjust the heating set point, instructing a speaker to play a song). In some embodiments, each personal assistant service 142 is independent and processes requests separately. For example, each personal assistant service 142 may have its own preferred search engine(s) for performing searches and may access certain resources that are not accessed by other personal assistant services.

In some embodiments, a personal assistant service 142 may receive requests in an audio format (e.g., audio samples of requests) and return responses that include audio samples (and/or data associated with audio samples) that is to be outputted to users. For example, a user could issue a voice input that includes a request. A personal assistant service 142 could receive an audio sample that includes the request. The personal assistant service 142 could then process the request and return a response that includes audio output (e.g., voice output, text-to-speech output).

In the same or other embodiments, a personal assistant service 142 may receive requests in textual form and return responses that include text that is to be outputted to users. For example, a user could input text that includes a request. A personal assistant service 142 would then receive the text input or a representation of the text input, process the request, and return a textual response. As yet another example, a user could issue voice input that includes a request, and the voice input could be converted into text by a speech-to-text module. A personal assistant service 142 could then process the text request and return a response which includes text that is output to the user.

In conventional approaches to interfacing with personal assistants, a device may interface with a single personal assistant service. For example, a device would be implemented with a personal assistant agent corresponding to only one personal assistant service and would be limited to interfacing with just the one personal assistant service. A user using such a device would have to make requests to just one personal assistant service or make requests to a different personal assistant service via the one personal assistant service. Alternatively, a device may implement multiple personal assistant agents (e.g., a personal assistant agent application for each desired personal assistant service). A user wishing to make a request to a personal assistant service would then need to activate the corresponding personal assistant agent individually (e.g., by launching the corresponding personal assistant agent application) before making the request. Furthermore, multiple personal assistant agents that have been activated may compete for resources at the device (e.g., compete for microphone input) and confuse the user.

To address these issues, in various embodiments, a personal assistant coordinator application 150 coordinates communications between computing device 100 and multiple personal assistant services 142. In some embodiments, personal assistant coordinator application 150 includes multiple personal assistant agents 212 that interface with respective personal assistant services 142. In operation, personal assistant coordinator application 150 receives user input that includes a request to a personal assistant service. The user input may include an indication of the personal assistant service 142 to which the request is directed. The personal assistant coordinator application 150 then identifies the personal assistant service 142 to which the request is directed. Next, the personal assistant agent 212 corresponding to the identified personal assistant service 142 transmits the request to the identified personal assistant service 142. The personal assistant agent 212 then receives a response from the personal assistant service 142. Accordingly, personal assistant coordinator application 150 may seamlessly direct requests to any of multiple personal assistant services without a user needing to activate the corresponding personal assistant agents individually.

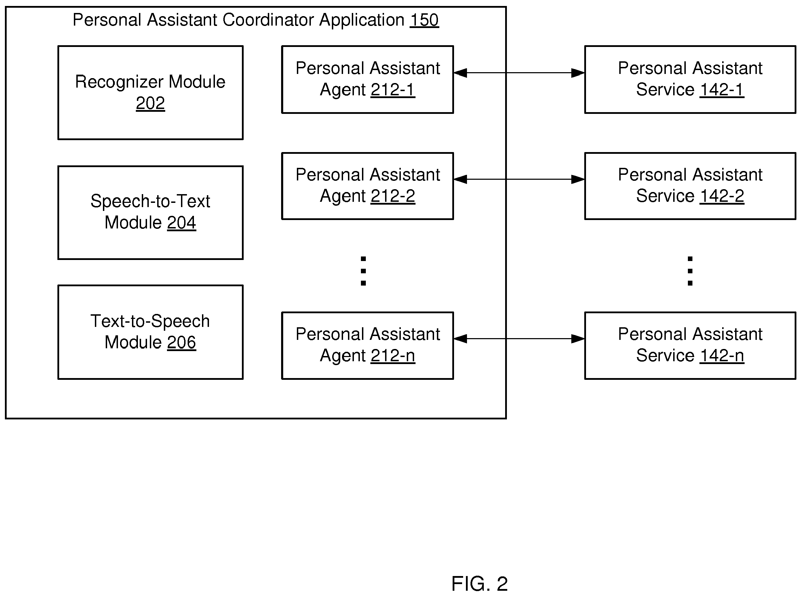

Figure 2 is a block diagram of a personal assistant coordinator application 150 for interfacing with multiple personal assistant services, according to one or more aspects of the various embodiments. Computing device 100 may interface with personal assistant services 142 via personal assistant coordinator application 150. Personal assistant coordinator application 150 includes a recognizer module 202, a speech-to-text module 204, a text-to-speech module 206, and personal assistant agents 212.

Recognizer module 202 receives user input and processes the user input to identify one or more types of information included in the user input. Recognizer module 202 may receive user input via I/O devices 108. For example, recognizer 202 could receive voice input via microphone 134. As another example, recognizer module 202 could receive text input via a physical keyboard or a virtual keyboard on a touch screen. As a further example, recognizer module 202 could receive user input via a wireless module that is in communication with an external device. Additionally, recognizer module 202 may transmit data (e.g., user input, requests associated with user input) to personal assistant services 142 via personal assistant agents 212.

In various embodiments, recognizer 202 may constantly monitor I/O devices 108 (e.g., microphone 134, etc.) for user input and/or monitor I/O devices 108 for user input when certain criteria are met (e.g., based on a time of day, a vehicle state, whether a connected external device is in standby mode, a previous user request, etc.)

In various embodiments, recognizer module 202 may monitor I/O devices 108 (e.g., microphone 134) for user input in response to activation of a "push-to-talk" ("PTT") input device by a user. For example, a physical control 137 (e.g., a button) could be configured as a "push-to-talk" input device that a user would activate. In response to activation of the PTT input device by a user (e.g., push and release of a PTT button by the user), recognizer module 202 would monitor I/O devices 108 for user input.

In various embodiments, recognizer module 202 may receive a personal assistant selection from a user via one or more physical controls 137. For example, physical controls 137 could include a selector that is configured to receive a selection of a personal assistant service 142, enabling a user to select a personal assistant service 142 to which a request will be directed. For example, if the selector is a rotary knob, then a user could turn the knob to select the personal assistant service 142. Recognizer module 202 would then receive the selection of a personal assistant service 142 as indicated by the user via the selector. Nonlimiting examples of selectors that could be implemented to receive a personal assistant selection from a user may include, without limitation, a switch, a rotary knob, one or more buttons, a touchscreen dial, and/or one or more touchscreen buttons.

In various embodiments, recognizer module 202 is configured to process user input to identify certain types of information within the user input, including a trigger phrase and a command. A trigger phrase - which is also commonly referred to as a wake word, a hot word, or a predicate - is a predefined set of one or more words that indicate a request to a particular personal assistant service 142. Each personal assistant service 142 may be associated with one or more predefined trigger phrases (e.g., a trigger phrase that corresponds to a specific personal assistant service). Trigger phrases and their associations with specific personal assistant services 142 may be stored in storage 114 (e.g., in a database). Recognizer module 202 may reference the database of trigger phrases in order to recognize a trigger phrase in user input. In some embodiments, recognizer module 202 then identifies a personal assistant service 142 to which a request is directed based on the trigger phrase (e.g., by identifying the personal assistant service 142 associated with the trigger phrase). Examples of trigger phrases include, without limitation, "Hey Alexa," "OK Google," Hey Siri," and so on.

A command includes one or more words that convey a user request (e.g., for a task, a service, a query, etc.). In some embodiments, a command may include an instruction, a query, or another phrase in natural language form that embodies a request. Alternatively, the command may be formatted in accordance with a predefined grammar and/or predefined set of words. Examples of commands include, without limitation, "set a meeting for next Monday at noon," "play my songs," "set the thermostat to 70 degrees," "buy a new water filter," and so on. In various embodiments, a command in user input is preceded by a trigger phrase.

Recognizer module 202 may use any suitable technique to process user input in order to identify a trigger phrase and a command. For example, recognizer module 202 could use voice recognition techniques to process voice input in order to recognize words and phrases in the voice input. Recognizer module 202 would then process the words and phrases (e.g., using natural language processing techniques) to recognize a trigger phrase and a command.

In some embodiments, recognizer module 202 identifies the end of user input based on one or more criteria (e.g., a silence from the user of a predefined duration following a voice input, a break of at least a predefined duration between one text input and the next).

Speech-to-text module 204 converts speech data (e.g., voice input) to text data. Speech-to-text module 204 may perform the speech-to-text conversion using any suitable technique (e.g., Markov models, neural networks). Text-to-speech module 206 converts text data into speech data, which may be output as an audible voice. Text-to-speech module 206 may perform text-to-speech conversion using any suitable technique (e.g., speech synthesis).

In various embodiments, personal assistant agents 212 are software modules (e.g., software agents) that interface with personal assistant services 142. Each personal assistant agent 212 corresponds to a respective personal assistant service 142. For example, personal assistant agent 212-1 could correspond to personal assistant service 142-1, personal assistant agent 212-2 could correspond to personal assistant service 142-2, and so on. A personal assistant agent 212 may connect to and interface with a corresponding personal assistant service 142 via network(s) 110 (omitted in Figure 2). In some embodiments, a personal assistant agent 212 may connect to a corresponding personal assistant service 142 by registering with the personal assistant service 142. For example, a personal assistant agent 212-n could signal its active status to personal assistant service 142-n so that personal assistant service 142-n is aware of the presence of personal assistant agent 212-n and computing device 100. Additionally, personal assistant agent 212-n could communicate with personal assistant service 142-n to authenticate computing device 100 and user accounts associated with computing device 100.

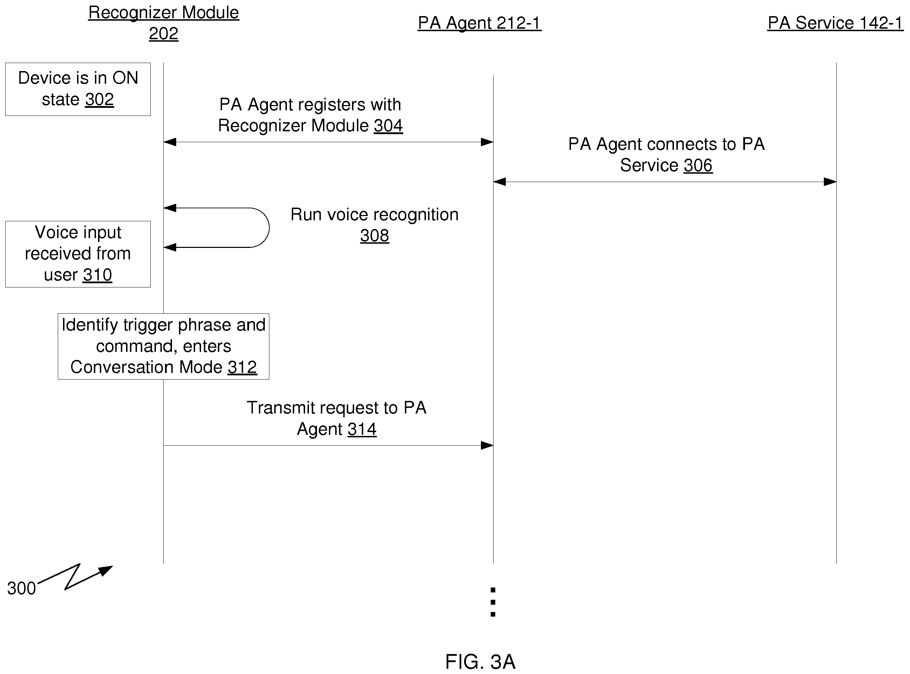

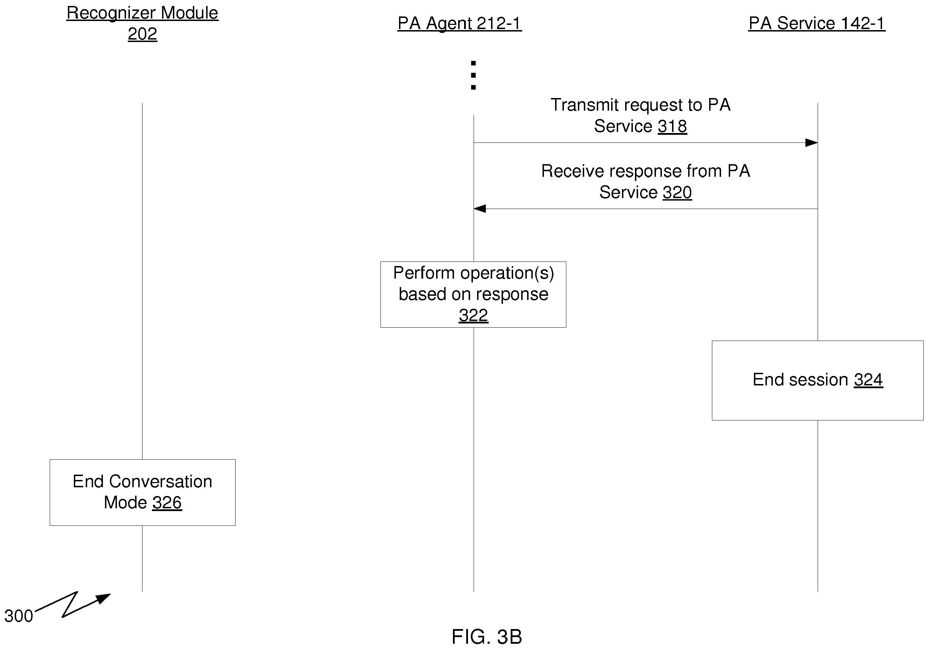

Figures 3A-3B illustrate a flow diagram of an exemplary process 300 for audio-based communications between a personal assistant coordinator application and a personal assistant service, according to one or more aspects of the various embodiments. Process 300 includes communications between recognizer module 202 and a personal assistant agent 212 (e.g., personal assistant agent 212-1 as shown) of personal assistant coordinator application 150. Process 300 further includes communications between personal assistant coordinator application 150 (e.g., via personal assistant agent 212-1 as shown) and a personal assistant service 142 (e.g., personal assistant service 142-1 as shown).

As shown in Figure 3A, process 300 begins at step 302, in which computing device 100 enters the "ON" state (e.g., computing device 100 is powered on). In response to computing device 100 being in the "ON" state, at step 304, personal assistant agent 212-1 (and also the other personal assistant agents 212 included in personal assistant coordinator application 150) registers with recognizer module 202. For example, personal assistant agent 212-1 could transmit data (e.g., one or more signals or messages) to recognizer module 202 to announce the presence of personal assistant agent 212-1.

At step 306, personal assistant agent 212-1 connects to personal assistant service 142-1. For example, personal assistant agent 212-1 could transmit data (e.g., one or more signals or messages) to establish a connection with, and announce its presence to, personal assistant service 142-1. Furthermore, personal assistant agent 212-1 could authenticate computing device 100 and one or more user accounts (e.g., user accounts for one or more online resources) associated with computer device 100 to personal assistant service 142-1. Information for the user accounts may be stored in storage 114. By authenticating computing device 100 and the user accounts, personal assistant service 142-1 recognizes that computing device 100 is authorized to receive and output content associated with the user accounts (e.g., emails, calendar events, music from a paid-subscription music streaming service, etc.). Additionally, other personal assistant agents 212 included in personal assistant coordinator application 150 may connect with their respective corresponding personal assistant services 142 in a similar manner.

At step 308, recognizer module 202 runs voice recognition. While running voice recognition, recognizer module 202 monitors microphone 134 to listen for voice input. When voice input is received, recognizer module 202 processes the voice input to recognize words and phrases in the voice input and to identify a trigger phrase and a command amongst the words and phrases. In some embodiments, recognizer module 202 constantly monitors microphone 134 for voice input in response to personal assistant agents 212 completing registration with recognizer module 202. In the same or other embodiments, recognizer module 202 constantly monitors microphone 134 for voice input in response to activation of a PTT input device and personal assistant agents 212 completing registration with recognizer module 202.

In various embodiments, recognizer module 202 may receive a personal assistant selection before receiving voice input from a user. A user may make a personal assistant selection via a selector (e.g., a rotary knob, one or more buttons, one or more virtual buttons displayed on a touchscreen, etc.) included in physical controls 137, and then issue voice input. In such embodiments, recognizer module 202 would receive the personal assistant selection from the selector included in physical controls 137 and then receive the voice input from microphone 134.

At step 310, recognizer module 202 receives voice input from a user via microphone 134. Voice input issued by the user is captured by microphone 134 and is received by the listening recognizer module 202. Recognizer module 202 detects the end of a particular instance of voice input when, for example, there is a silence from the user of a predefined duration following the voice input. The user may issue voice input after making a physical assistant selection, as described above.

At step 312, recognizer module 202 identifies a trigger phrase and one or more commands in the voice input. In some embodiments, in response to identifying the trigger phrase, recognizer module 202 may enter into conversation mode. While in conversation mode, recognizer module 202 constantly monitors microphone 134 for voice input, processes any voice input received from microphone 134 to identify the trigger phrase and command, and transmits (e.g., streams) some or all of the voice input received from microphone 134 to personal assistant service 142-1 via personal assistant agent 212-1. In some embodiments, while recognizer module 202 is in conversation mode, computing device 100 may activate echo cancellation to cancel out certain audio echoes captured by microphone 134.

In some embodiments, recognizer module 202 identifies personal assistant service 142-1 and personal assistant agent 212-1 based on the trigger phrase. Additionally, in some embodiments, recognizer module 202 identifies personal assistant service 142-1 and personal assistant agent 212-1 based on a personal assistant selection made by the user via a selector included in physical controls 137.

At step 314, recognizer module 202 transmits a request based on the voice input to personal assistant agent 212-1. In some embodiments, the recognizer module 202 transmits a voice sample of the command (e.g., from microphone 134) to personal assistant agent 212-1. Alternatively, the recognizer module 202 transmits voice samples of the trigger phrase and the command (e.g., from microphone 134) to personal assistant agent 212-1. The voice samples of the trigger phrase and the command may be transmitted as pulse-code modulation (PCM) signals (e.g., a PCM stream) or as any other compressed or uncompressed audio format.

In various embodiments, recognizer module 202 may transmit a message to personal assistant agent 212-1 prior to or concurrent with transmitting the request based on the voice input, in order to invoke personal assistant agent 212-1 to perform a certain function (e.g., transmitting voice samples to personal assistant service 142-1). The message may indicate that personal assistant agent 212-1 will be transmitting voice samples to personal assistant service 142-1. In some embodiments, the message is an intent that is transmitted via an operating system (e.g., an ANDROID operating system) running on computing device 100.

In various embodiments, recognizer module 202 may store the request in a buffer prior to transmitting the request to personal assistant agent 212-1, for example, so that personal assistant agent 212-1 can be invoked prior to transmitting the request. For example, recognizer module 202 could buffer the voice samples of the trigger phrase and the command in a voice sample buffer (e.g., in memory 116). Concurrently with or after buffering the voice samples, recognizer module 202 would transmit the message (e.g., an intent) to personal assistant agent 212-1 to invoke personal assistant agent 212-1. Then, in response to successfully invoking personal assistant agent 212-1, recognizer module 202 would transmit the voice samples via the buffer to personal assistant agent 212-1.

At step 318, personal assistant agent 212-1 transmits the request (e.g., the voice sample of the command, and optionally the voice sample of the trigger phrase) to personal assistant service 142-1. The voice samples may be transmitted to personal assistant service 142-1 as pulse-code modulation (PCM) signals (e.g., a PCM stream) or as any other compressed or uncompressed audio format. In some embodiments, PCM sample elimination (e.g., eliminating overlapping and/or inaudible frequencies) may be performed on the PCM signals to reduce the bandwidth occupied by the PCM signals. In some embodiments, the voice sample(s) are transmitted to the personal assistant service 142-1 via a Real-time Transport Protocol (RTP) connection to an RTP socket at personal assistant service 142-1. The transmission of the voice sample of the command - and, optionally, the voice sample of the trigger phrase - initiates a session between computing device 100 and personal assistant service 142-1.

At step 320, personal assistant agent 212-1 receives a response from personal assistant service 142-1. The response may include a voice sample that corresponds to a response to the request and/or other content (e.g., textual content, graphical content, video content, etc.). In various embodiments, the voice sample may include a response to a question in the request, a response telling the user that an operation will or will not be performed, and so on. The voice sample may be transmitted by personal assistant service 142-1 to personal assistant agent 212-1 as pulse-code modulation (PCM) signals (e.g., a PCM stream) or as any other compressed or uncompressed audio format. In some embodiments, the voice sample is transmitted to the personal assistant agent 212-1 via a Real-time Transport Protocol (RTP) connection to an RTP socket at personal assistant agent 212-1. In some embodiments, personal assistant service 142-1 transmits the voice sample and/or other content to a first RTP socket at personal assistant agent 212-1 and transmits, to a second RTP socket, instructions to computing device 100 or other devices to perform operations or execute functions at personal assistant agent 212-1.

At step 322, personal assistant agent 212-1 performs one or more operations based on the response received from personal assistant service 142-1. For example, if personal assistant agent 212-1 receives a voice sample in response to a request, then personal assistant agent 212-1 could output the voice sample via speaker 132. As another example, personal assistant agent 212-1 could output textual content and graphical content via display device 136. Alternatively, personal assistant agent 212-1 could output textual content as audio by first converting the textual content to voice via speech-to-text module 204 and then outputting the voice via speaker 132. Furthermore, personal assistant agent 212-1 could perform, at computing device 100, one or more operations based on the response and/or transmit instructions to perform certain operations or execute certain functions based on the response to another application executing on computing device 100 (e.g., transmit instructions to a music streaming application to play music) or to another device that is in communication with computing device 100 (e.g., transmit instructions to a smart thermostat to set a heating or cooling temperature).

At step 324, personal assistant service 142-1 ends the session with computing device 100. In some embodiments, personal assistant service 142-1 may end the session by closing the connection(s) (e.g., RTP socket(s)) to which personal assistant agent 212-1 transmits voice samples. Further, in some embodiments, personal assistant service 142-1 may end the session if the time elapsed since receiving the last request from personal assistant agent 212-1 is longer than a predefined amount of time (e.g., timeout for receiving requests from personal assistant agent 212-1).

At step 326, recognizer module 202 ends conversation mode. For example, if no request has been received from personal assistant agent 212-1 for more than a predefined threshold amount of time, recognizer module 202 could end conversation mode and stop constant monitoring of microphone 134. Recognizer module 202 also may end conversation mode in response to personal assistant service 142-1 ending the session with computing device 100.

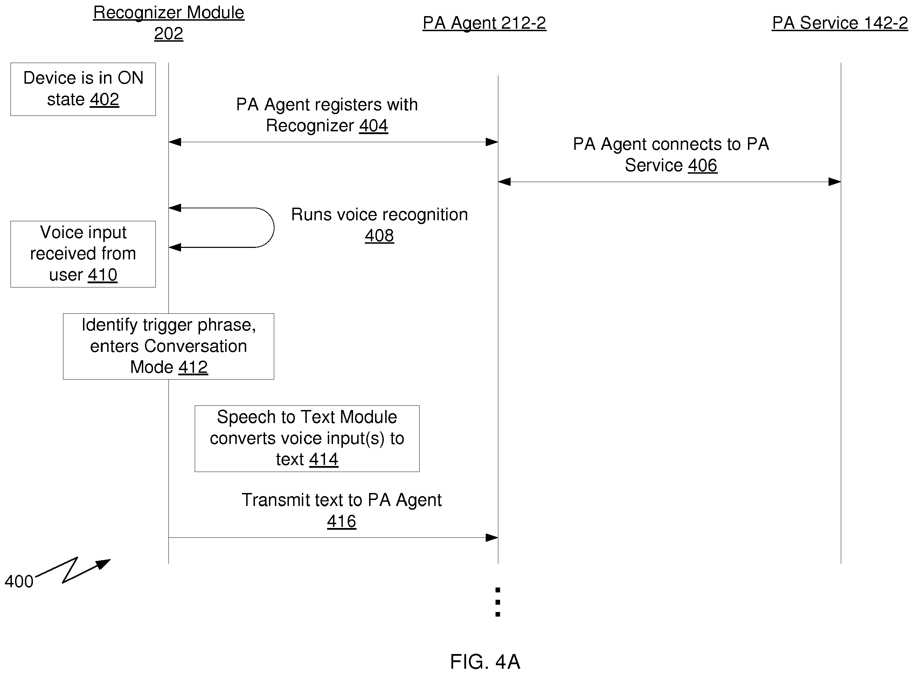

Figures 4A-4B illustrate a flow diagram of an exemplary process 400 for text-based communications between a personal assistant coordinator application and a personal assistant service, according to one or more aspects of the various embodiments. Process 400 includes communications between recognizer module 202 and a personal assistant agent 212 (e.g., personal assistant agent 212-2 as shown) of personal assistant coordinator application 150. Process 300 further includes communications between personal assistant coordinator application 150 (e.g., via personal assistant agent 212-2 as shown) and a personal assistant service 142 (e.g., personal assistant service 142-2 as shown).

As shown in Figure 4A, process 400 begins at step 402, in which computing device 100 enters the "ON" state (e.g., computing device 100 is powered on). In response to computing device 100 being in the "ON" state, at step 404, personal assistant agent 212-2 (and also the other personal assistant agents 212 included in personal assistant coordinator application 150) registers with recognizer module 202. For example, personal assistant agent 212-2 could transmit data (e.g., one or more signals or messages) to recognizer module 202 to announce the presence of personal assistant agent 212-2.

At step 406, personal assistant agent 212-2 connects to personal assistant service 142-2. For example, personal assistant agent 212-2 could transmit data (e.g., one or more signals or messages) to establish a connection with, and announce its presence to, personal assistant service 142-2. Further, personal assistant agent 212-2 could authenticate computing device 100 and one or more user accounts (e.g., user accounts for one or more online resources) associated with computer device 100 to personal assistant service 142-2. Information for the user accounts may be stored in storage 114. By authenticating computing device 100 and the user accounts, personal assistant service 142-2 recognizes that computing device 100 is authorized to receive and output content associated with the user accounts (e.g., emails, calendar events, music from a paid-subscription music streaming service, etc.). Additionally, other personal assistant agents 212 included in personal assistant coordinator application 150 may connect with their respective personal assistant services 142 in a similar manner.

At step 408, recognizer module 202 runs voice recognition. While running voice recognition, recognizer module 202 monitors microphone 134 to listen for voice input. When voice input is received, recognizer module 202 processes the voice input to recognize words and phrases in the voice input and to identify a trigger phrase and a command amongst the words and phrases. In some embodiments, recognizer module 202 constantly monitors microphone 134 for voice input in response to personal assistant agents 212 completing registration with recognizer module 202. In some other embodiments, recognizer module 202 constantly monitors microphone 134 for voice input in response to personal assistant agents 212 completing registration with recognizer module 202 and, optionally, in response to activation of a PTT input device.

In various embodiments, recognizer module 202 may receive a personal assistant selection before receiving voice input from a user. A user may make a personal assistant selection via a selector (e.g., a rotary knob, one or more buttons, one or more virtual buttons displayed on a touchscreen, etc.) included in physical controls 137, and then issue voice input. In such embodiments, recognizer module 202 would receive the personal assistant selection from the selector included in physical controls 137 and then receive the voice input from microphone 134.

At step 410, recognizer module 202 receives voice input from a user via microphone 134. Voice input issued by the user is captured by microphone 134 and is then received by the listening recognizer module 202. Recognizer module 202 detects the end of a particular instance of voice input when, for example, there is a silence from the user of a predefined duration following the voice input. The user may issue voice input after making a physical assistant selection, as described above.

At step 412, recognizer module 202 identifies a trigger phrase and one or more commands in the voice input. In some embodiments, in response to identifying the trigger phrase, recognizer module 202 may enter into conversation mode. While in conversation mode, recognizer module 202 constantly monitors microphone 134 for voice input, processes any voice input received from microphone 134 to identify the trigger phrase and command, and transmits (e.g., streams) some or all of the voice input received from microphone 134 to personal assistant service 142-2 via personal assistant agent 212-2. In some embodiments, while recognizer module 202 is in conversation mode, computing device 100 may activate echo cancellation to cancel out certain audio echoes captured by microphone 134.

In some embodiments, recognizer module 202 identifies personal assistant service 142-2 and personal assistant agent 212-2 based on the trigger phrase. In some other embodiments, recognizer module 202 identifies personal assistant service 142-2 and personal assistant agent 212-2 based on a personal assistant selection made by the user via a selector included in physical controls 137.

At step 414, recognizer module 202 converts the command, and optionally the trigger phrase, in the voice input into text string(s) via speech-to-text module 204. Speech-to-text module 204 may perform the speech to text conversion using any suitable technique. The conversion may also include formatting the text strings for transmission (e.g., formatting the text strings in JavaScript Object Notation (JSON) format). The text strings may be encoded in Unicode or any other suitable encoding scheme.

At step 416, recognizer module 202 transmits a request based on the voice input to personal assistant agent 212-2. In various embodiments, recognizer module 202 transmits the request in the form of the text string of the command and, optionally, also the text string of the trigger phrase. The text string(s) may be formatted in JSON format.

In various embodiments, recognizer module 202 may transmit a message to personal assistant agent 212-2 prior to or concurrent with transmitting the request based on the voice input, in order to invoke personal assistant agent 212-2 to perform a certain function (e.g., transmitting text strings to personal assistant service 142-2). The message may indicate that personal assistant agent 212-2 will be transmitting text strings to personal assistant service 142-2. In some embodiments, the message is an intent that is transmitted via an operating system (e.g., an ANDROID operating system) running on computing device 100. In such embodiments, the text strings of the request may be transmitted to personal assistant agent 212-2 in conjunction with the message that invokes personal assistant agent 212-2 (e.g., the message may include the text strings of the request).

At step 418, personal assistant agent 212-2 transmits the request (e.g., the text string of the command and, optionally, the text string of the trigger phrase) to personal assistant service 142-2. The text string(s) may be formatted in JSON format. In some embodiments, the voice sample(s) are transmitted to the personal assistant service 142-1 via the WebSocket protocol (e.g., Representational State Transfer (RESTful) WebSockets). The transmission of the text string of the command, and optionally the text sting of the trigger phrase, initiates a session between computing device 100 and personal assistant service 142-2.

At step 420, personal assistant agent 212-2 receives a response from personal assistant service 142-2. The response may include one or more text strings that correspond to a response to the request and/or other content (e.g., audio, graphical content, video content, etc.). In various embodiments, the text strings may include a response to a question in the request, a response telling the user that an operation will or will not be performed, and so on. The test strings may be transmitted by personal assistant service 142-2 to personal assistant agent 212-2 in JSON format. In some embodiments, the text strings are transmitted to personal assistant agent 212-2 via the WebSocket protocol (e.g., Representational State Transfer (RESTful) WebSockets). In some embodiments, personal assistant service 142-2 transmits the text strings and/or other content via a first WebSocket connection to personal assistant agent 212-2 and transmits instructions to computing device 100 or other devices to perform operations or execute functions via a second WebSocket connection to personal assistant agent 212-2.

At step 422, personal assistant agent 212-2 converts, via text-to-speech module 206, the received text strings in the response to speech (e.g., voice samples). Text-to-speech module 206 may convert the text strings to voice samples using any suitable technique.

At step 424, personal assistant agent 212-2 performs one or more operations based on the response received from personal assistant service 142-2. For example, if personal assistant agent 212-2 receives a text string in response to a request, then personal assistant agent 212-2 could first convert the text string to a voice sample, as described above with reference to step 422, and then output the voice sample via speaker 132. As another example, personal assistant agent 212-2 could output textual content (e.g., the text string, other textual content) and graphical content via display device 136. Furthermore, personal assistant agent 212-2 could perform, at computing device 100, one or more operations based on the response and/or transmit instructions to perform certain operations or execute certain functions based on the response to another application executing on computing device 100 (e.g., transmit instructions to a music streaming application to play music) or to another device that is in communication with computing device 100 (e.g., transmit instructions to a smart thermostat to set a heating or cooling temperature).

At step 426, personal assistant service 142-2 ends the session with computing device 100. In some embodiments, personal assistant service 142-2 may end the session by closing the connection(s) (e.g., WebSocket connection(s)) to which personal assistant agent 212-2 transmits text strings. Personal assistant service 142-2 may end the session if the time elapsed since receiving the last request from personal assistant agent 212-2 is longer than a predefined amount of time (e.g., timeout for receiving requests from personal assistant agent 212-2).

At step 428, recognizer module 202 ends conversation mode. For example, if no request has been received from personal assistant agent 212-2 for more than a predefined threshold amount of time, recognizer module 202 could end conversation mode and stop monitoring of microphone 134. Recognizer module 202 also may end conversation mode in response to personal assistant service 142-2 ending the session with computing device 100.

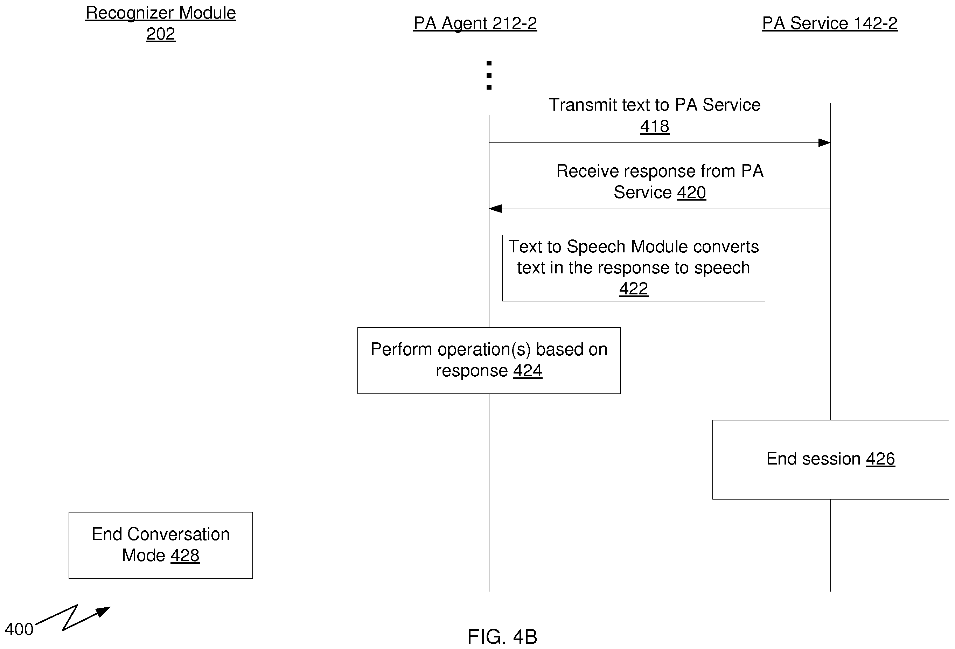

It should be appreciated that, while Figures 4A-4B describes a process in which recognizer module 202 receives voice input and converts the voice input into text strings, recognizer module 202 may also receive text input, which may include a trigger phrase and a command in one or more text strings. For example, a user could issue text input that may include a trigger phrase and a command at computing device 100 or at a device communicatively coupled to computing device 100. Recognizer module 202 would then receive the text input and could process the text input to identify the trigger phrase and the command in the text input using any suitable technique, similar to step 412 described above. Step 414 may be omitted, since the text input already includes text strings. The text input may be formatted for transmission (e.g., formatted in JSON format) and transmitted to personal assistant agent 212-2, similar to step 416 described above. The subsequent steps, shown in Figure 4B, may proceed as described above.

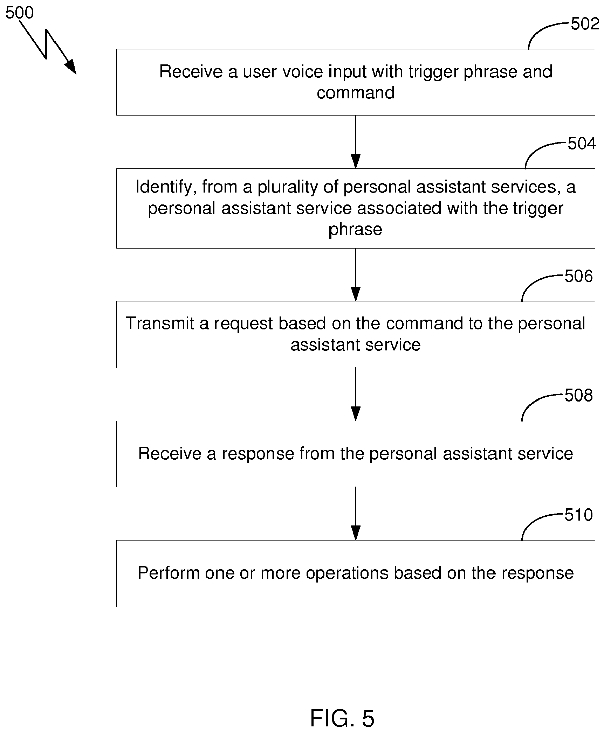

Figure 5 sets forth a flowchart of method steps for interfacing with a particular personal assistant service included in a plurality of different personal assistant services, according to one or more aspects of the various embodiments. Although the method steps are described in conjunction with the systems of Figures 1-4B, persons skilled in the art will understand that any system configured to perform the method steps, in any order, falls within the scope of the various embodiments.

As shown in Figure 5, a method 500 begins at step 502, where personal assistant coordinator application 150 (e.g., recognizer module 202) receives user input that may include a trigger phrase and a command. Personal assistant coordinator application 150 may receive the user input from microphone 134, physical control(s) 137, or from another device communicatively coupled to computing device 100.

At step 504, personal assistant coordinator application 150 (e.g., recognizer module 202) identifies, from a plurality of personal assistant services (e.g., personal assistant services 142), a personal assistant service (e.g., personal assistant service 142-1) associated with the trigger phrase. Alternatively, personal assistant coordinator application 150 may identify a personal assistant service from the plurality of personal assistant services 142 based on a personal assistant selection made by the user via a selector included in physical controls 137.

At step 506, personal assistant coordinator application 150 (e.g., personal assistant agent 212-1 corresponding to personal assistant service 142-1) transmits a request based on the command to the personal assistant service (e.g., personal assistant service 142-1). The request may include a voice sample of the command and, optionally, a voice sample of the trigger phrase. Alternatively, the request may include a text string of the command and optionally a text string of the trigger phrase.

At step 508, personal assistant coordinator application 150 (e.g., personal assistant agent 212-1 corresponding to personal assistant service 142-1) receives a response from the personal assistant service (e.g., personal assistant service 142-1). The response may include audio content (e.g., voice samples), textual content (e.g., text strings), graphical content, instructions to an application at computing device 100 or another device, and/or any other type of content associated with the request.

At step 510, personal assistant coordinator application 150 (e.g., personal assistant agent 212-1 corresponding to personal assistant service 142-1) performs one or more operations based on the response. For example, personal assistant agent 212-1 could output audio content via speaker 132 and/or output textual content and graphical content via display device 136. Speech-to-text module 204 could convert voice samples to text strings, and personal assistant agent 212-1 could output the text strings via display device 136. Text-to-speech module 206 could convert text strings to voice samples, and personal assistant agent 212-1 could output the voice samples via speaker 132. Personal assistant agent 212-1 could transmit the instructions to an application at computing device 100 or another device.

In various embodiments, the method 500 may be performed for any user input received by personal assistant coordinator application 150. Personal assistant coordinator application 150 identifies the specific personal assistant service 142 to which the request in the user input is directed based on the trigger phrase or a personal assistant selection. Personal assistant coordinator application 150 then transmits the request to the specific personal assistant service 142. Accordingly, personal assistant coordinator application can transmit requests directed to different personal assistant services to the proper personal assistant services.

In sum, a personal assistant coordinator receives user input that includes a trigger phrase and a command. The personal assistant coordinator then identifies, from a plurality of different remote personal assistant services, a remote personal assistant service that corresponds to the trigger phrase. Next, the personal assistant coordinator transmits a request based on the command phrase to the identified remote personal assistant service. In some embodiments, the request may include an audio sample of the command and, optionally, a voice sample of the trigger phrase. Alternatively, the request may include a text version of the command and, optionally, a text version of the trigger phrase. The personal assistant coordinator then receives a response from the remote personal assistant service. The response may include voice, text, graphics, instructions, etc. Finally, the personal assistant coordinator may perform one or more operations based on the response. In various embodiments, the operations may include outputting voice (which may have been converted from text), outputting text, outputting other content (e.g., graphics), and/or operating a device according to instructions.

At least one advantage and technological improvement of the above techniques is that a user is able to interact with any of multiple personal assistants via a single device. Additionally, the user may interact with any of the multiple personal assistants without having to use one personal assistant as an intermediary to the other personal assistants or having to use multiple devices, where each of the multiple devices is associated with a different personal assistant. Accordingly, interactions between the user and the personal assistant are more intuitive and conversational, resulting in a smoother and more efficient experience for the user.
1. In some embodiments, a computer-implemented method for interfacing with a plurality of intelligent personal assistants comprises receiving first user input comprising a first trigger phrase and a first command; identifying, via a processor and from a plurality of personal assistant services, a first personal assistant service that corresponds to the first trigger phrase, wherein the processor is configured to communicate with each personal assistant service included in the plurality of personal assistant services; transmitting a first request associated with the first command to the first personal assistant service; receiving a response to the first request from the first personal assistant service; and performing one or more operations based on the response.
2. The method of clause 1, further comprising receiving second user input comprising a second trigger phrase and a second command; identifying, via the processor and from the plurality of personal assistant services, a second personal assistant service that corresponds to the second trigger phrase; transmitting a second request associated with the second command to the second personal assistant service; receiving a second response to the second request from the second personal assistant service; and performing one or more operations based on the second response.
3. The method of clauses 1 or 2, wherein the first user input comprises voice input, and transmitting the first request to the first personal assistant service comprises transmitting a voice sample of the first command included in the voice input to the first personal assistant service.
4. The method of any of clauses 1-3, wherein transmitting the first request to the first personal assistant service further comprises transmitting a voice sample of the first trigger phrase included in the voice input to the first personal assistant service.
5. The method of any of clauses 1-4, further comprising buffering the voice sample of the first command prior to transmitting the voice sample of the first command to the first personal assistant service.
6. The method of any of clauses 1-5, wherein the first user input comprises voice input, and wherein transmitting the first request to the first personal assistant service comprises converting a voice sample of the first command included in the voice input into one or more text strings; and transmitting the one or more text strings to the first personal assistant service.
7. The method of any of clauses 1-6, wherein the response comprises at least one of audio content, textual content, graphical content, video content, and instructions for executing one or more functions.
8. The method of any of clauses 1-7, wherein performing the one or more operations based on the response comprises outputting at least one of the audio content, the textual content, the graphical content, and the video content.
9. The method of any of clauses 1-8, wherein the response comprises instructions for executing one or more functions, and performing the one or more operations based on the response comprises transmitting the instructions to a vehicle subsystem, wherein the vehicle subsystem executes the one or more functions.
10. In some embodiments, a non-transitory computer readable medium stores instructions that, when executed by a processor, cause the processor to perform the steps of receiving first user voice input comprising a first trigger phrase and a first command; identifying, from a plurality of personal assistant services, a first personal assistant service that corresponds to the first trigger phrase, wherein the processor is configured to communicate with each personal assistant service included in the plurality of personal assistant services; converting a voice sample of the first command included in the first user voice input into one or more first text strings; transmitting a first request associated with the first command to the first personal assistant service, the first request comprising the one or more first text strings; receiving a response to the first request from the first personal assistant service; and performing one or more operations based on the response.
11. The non-transitory computer readable medium of clause 10, wherein the instructions further cause the processor to perform the steps of receiving second user voice input comprising a second trigger phrase and a second command; identifying, from the plurality of personal assistant services, a second personal assistant service that corresponds to the second trigger phrase; converting a voice sample of the second command included in the second user voice input into one or more second text strings; transmitting a second request associated with the second command to the second personal assistant service, the second request comprising the one or more second text strings; receiving a second response to the second request from the second personal assistant service; and performing one or more operations based on the second response.
12. The non-transitory computer readable medium of clauses 10 or 11, wherein the instructions further cause the processor to perform the step of converting a voice sample of the first trigger phrase included in the first user voice input into one or more second text strings, and the first request further comprises the one or more second text strings.
13. The non-transitory computer readable medium of any of clauses 10-12, wherein the response comprises one or more second text strings.
14. The non-transitory computer readable medium of any of clauses 10-13, wherein the instructions further cause the processor to perform the step of outputting the one or more second text strings via a display device.
15. The non-transitory computer readable medium of any of clauses 10-14, wherein the instructions further cause the processor to perform the steps of converting the one or more second text strings into one or more second voice samples; and transmitting the one or more second voice samples to an audio output device.
16. In some embodiments, a system configured to interface with a plurality of intelligent personal assistants comprises a memory storing instructions; and a processor that is coupled to the memory and, when executing the instructions, is configured to receive a personal assistant selection via an input device; receive user voice input comprising a command; identify, from a plurality of personal assistant services, a first personal assistant service based on the personal assistant selection, wherein the processor is configured to communicate with each personal assistant service included in the plurality of personal assistant services; transmit a request associated with the command to the first personal assistant service; receive a response to the request from the first personal assistant service; and perform one or more operations based on the response.
17. The system of clause 16, wherein the input device comprises one or more selectors.
18. The system of clauses 16 or 17, wherein the one or more selectors comprise at least one of a switch, a rotary knob, a button, a touchscreen dial, and a touchscreen button.
19. The system of any of clauses 16-18, wherein transmitting the request to the first personal assistant service comprises transmitting a voice sample of the command included in the user voice input to the first personal assistant service.
20. The system of any of clauses 16-19, wherein the user voice input further comprises a trigger phrase, and wherein transmitting the request to the first personal assistant service further comprises transmitting the trigger phrase to the first personal assistant service.
21. The system of any of clauses 16-20, wherein transmitting the trigger phrase to the first personal assistant service comprises transmitting a voice sample of the trigger phrase included in the user voice input to the first personal assistant service.

Any and all combinations of any of the claim elements recited in any of the claims and/or any elements described in this application, in any fashion, fall within the contemplated scope of the present protection.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module" or "system." Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A computer-implemented method for interfacing with a plurality of intelligent personal assistants, comprising:
receiving first user input comprising a first trigger phrase and a first command;
identifying, via a processor and from a plurality of personal assistant services, a first personal assistant service that corresponds to the first trigger phrase, wherein the processor is configured to communicate with each personal assistant service included in the plurality of personal assistant services;
transmitting a first request associated with the first command to the first personal assistant service;
receiving a response to the first request from the first personal assistant service; and
performing one or more operations based on the response.

2. The method of claim 1, further comprising:
receiving second user input comprising a second trigger phrase and a second command;
identifying, via the processor and from the plurality of personal assistant services, a second personal assistant service that corresponds to the second trigger phrase;
transmitting a second request associated with the second command to the second personal assistant service;
receiving a second response to the second request from the second personal assistant service; and
performing one or more operations based on the second response.

3. The method of claim 1, wherein the first user input comprises voice input, and transmitting the first request to the first personal assistant service comprises transmitting a voice sample of the first command included in the voice input to the first personal assistant service.

4. The method of claim 3, wherein transmitting the first request to the first personal assistant service further comprises transmitting a voice sample of the first trigger phrase included in the voice input to the first personal assistant service.

5. The method of claim 3, further comprising buffering the voice sample of the first command prior to transmitting the voice sample of the first command to the first personal assistant service.

6. The method of claim 1, wherein the first user input comprises voice input, and wherein transmitting the first request to the first personal assistant service comprises:
converting a voice sample of the first command included in the voice input into one or more text strings; and
transmitting the one or more text strings to the first personal assistant service.

7. The method of claim 1, wherein the response comprises at least one of audio content, textual content, graphical content, video content, and instructions for executing one or more functions.

8. The method of claim 7, wherein performing the one or more operations based on the response comprises outputting at least one of the audio content, the textual content, the graphical content, and the video content.

9. The method of claim 1, wherein the response comprises instructions for executing one or more functions, and performing the one or more operations based on the response comprises transmitting the instructions to a vehicle subsystem, wherein the vehicle subsystem executes the one or more functions.

10. A computer program product comprising a computer-readable storage medium including instructions that, when executed by a processor, cause the processor to perform the steps of:
receiving first user voice input comprising a first trigger phrase and a first command;
identifying, from a plurality of personal assistant services, a first personal assistant service that corresponds to the first trigger phrase, wherein the processor is configured to communicate with each personal assistant service included in the plurality of personal assistant services;
converting a voice sample of the first command included in the first user voice input into one or more first text strings;
transmitting a first request associated with the first command to the first personal assistant service, the first request comprising the one or more first text strings;
receiving a response to the first request from the first personal assistant service; and
performing one or more operations based on the response.

11. A computer program product comprising a computer-readable storage medium including instructions that, when executed by a processor, cause the processor to perform the method of any of claims 1 to 9.

12. A system configured to interface with a plurality of intelligent personal assistants, comprising:
a memory storing instructions; and
a processor that is coupled to the memory and, when executing the instructions, is configured to:
receive a personal assistant selection via an input device;
receive user voice input comprising a command;
identify, from a plurality of personal assistant services, a first personal assistant service based on the personal assistant selection, wherein the processor is configured to communicate with each personal assistant service included in the plurality of personal assistant services;
transmit a request associated with the command to the first personal assistant service;
receive a response to the request from the first personal assistant service; and
perform one or more operations based on the response.

13. A system configured to interface with a plurality of intelligent personal assistants, comprising:
a memory storing instructions; and
a processor that is coupled to the memory and, when executing the instructions, is configured to perform the method of any of claims 1 to 9.
